# EUROPEAN PATENT SPECIFICATION

(11) **EP 0 432 993 B1**
(45) Date of publication and mention of the grant of the patent: **28.09.1994**
(21) Application number: 90313393.2
(22) Date of filing: 10.12.1990
(51) Int. Cl.: B29D 30/24

(54) **Tyre building apparatus**
Reifenaufbautrommel
Tambour de fabrication de pneus

(30) Priority: 14.12.1989 JP 325170/89; 18.12.1989 JP 327957/89
(43) Date of publication of application: 19.06.1991
(73) Proprietor: SUMITOMO RUBBER INDUSTRIES LIMITED, Kobe-shi Hyogo-ken (JP)
(72) Inventor: Nojiri, Yasushi, Kobe-shi, Hyogo-ken (JP); Naito, Sadaaki, New York, NY 140-1 (US)
(74) Representative: Stewart, Charles Geoffrey

(56) References cited:
- EP-A- 0 238 788
- DE-A- 1 729 780
- FR-A- 2 352 661
- US-A- 4 010 058

## Description

This invention relates to a tyre building apparatus, particularly to a single-stage tyre building apparatus.

Conventionally, there have been two methods of building raw tyres, particularly radial tyres. One is a single-stage method. The other is a two-stage method.

In the two-stage method, a cylindrical carcass is built first by use of a carcass former. Thereafter, this cylindrical carcass is dismounted from the carcass former, and transferred to a shaping drum. Accordingly, the two-stage method necessitates a transfer device, which results in a building apparatus of large scale construction and inefficient operation. In addition, the tyre components of the carcass are liable to deform during storage. Also, there is a likelihood that the carcass deforms when transferring to the shaping drum. Consequently, the raw tyre is inferior in uniformity.

In the conventional single-stage method the above-mentioned drawbacks, which the two-stage method has, are absent. However, in the conventional single-stage method, in which the carcass building and the toroidal shaping are carried out on the same drum, it is very difficult to provide sufficient space to expand and contract the diameter of the former. For this reason, the diameter of the conventional former is by necessity smaller than the bead diameter of the built raw tyre so as to enable the shaped raw tyre to be dismounted from the former, while in the two-stage method, a carcass former having a diameter greater than the bead diameter of a raw tyre may be used. Accordingly, the circumferential carcass ply application length is smaller in the single-stage method than in the two-stage method, so that the total volume of carcass plies used in the single-stage method is less than in the two-stage method. Consequently, in the conventional single-stage method, it has been necessary to use carcass plies having an increased cord density.

Furthermore, the conventional single-stage method uses a rubber former and a bladderless former. The rubber former is flexible in the central area of the former. The bladderless former has a space in the central area. Accordingly, in these formers it is difficult to apply a pressing roller successfully over the tyre carcass with a view to giving a good adhesion between the tyre components, such as insulation rubber, carcass plies, beads, apexes, sidewall rubber and others. Such a former is known for example from patent publication DE-A-1729780.

In the conventional single-stage method, there has also been used a comb-tooth type metal former. In this type of former, a rubber covering is necessary to fill the gaps between comb-tooth segments in the expanded state.

Also, the conventional metal former includes a number of segment units each having a centre segment and opposite side segments. This type of former has given the following problems. When the side segments are moved nearer to each other, the centre segment is liable to move away from the side segments. Consequently, the centre segment does not remain in the centre position of the former when the former is in both the axially expanded state and the axially contracted state. Also, due to the fact that the centre segment is not positioned in the centre of the former when the tyre components are applied on the axially expanded former, the toroidal shape of the carcass is deformed in the shaping step.

Furthermore, in the conventional single-stage method, sidewall rubbers are turned up around the bead rings together with the overhang portions of the carcass on the drum. Accordingly the sidewall rubbers are liable to slide out of the position, which consequently impairs the uniformity of the tyre.

It is an object of the present invention to provide a single-stage tyre building apparatus which is free from the above-mentioned drawbacks of both the single-stage method and the two-stage method but has the advantages of both.

Accordingly a tyre building apparatus of the present invention comprises former means including a plurality of segment units arranged around a circle and comprising at least right side segments and left side segments, an inner shaft extending through the former means, an outer hollow shaft axially slidably mounted on the inner shaft, a sleeve axially slidably mounted on the inner shaft, right guide means provided between the right side segments and the outer hollow shaft for guiding the movement of the right side segments in the radial direction and in the axial direction, left guide means provided between the left side segments and the sleeve for guiding the movement of the left side segments in the radial direction and in the axial direction, right slider means axially slidably mounted on the outer shaft, left slider means axially slidably mounted on the sleeve, a right link mechanism provided between the right guide means and the right slider means for moving the right side segments in the radial direction due to axial movement of the right slider means, and a left link mechanism provided between the left guide means and the left slider means for moving the left side segment in the radial direction by means of an axial movement of the left slider means, whereby the outer shaft and the sleeve, the right slider means, and the left slider means are respectively moved closer to or away from each other so as to set the former means into an axially expanded state, a radially expanded state, an axially contracted state, or a radially contracted state.

With the above-mentioned construction, when the right slider means and the left slider means are moved closer to and away from each other together with the outer shaft and the sleeve, the right and left side segments are moved in axial directions following the axial movements of both sliders, so that the former means is set into the axially expanded state and the axially contracted state. Further, when the right and left slider means are moved in axial directions, the right and left side segments are moved in the radial direction, so that the former means is set into the radially expanded state and the radially contracted state, specifically, the former means is set into the radially expanded state of making the diameter of the former means greater than the bead diameter of a tyre so as to provide a carcass ply application periphery, and the radially contracted state of making the diameter of the former means smaller so as to enable the assembled raw tyre to be dismounted.

The tyre building apparatus of the present invention may also comprise former means including a plurality of segment units arranged in a circumference, the segment unit having a centre segment, a right side segment, and a left side segment, right moving means for moving the right side segment at least in axial directions, left moving means for moving the left side segment at least in axial directions, and centre segment support means for supporting the centre segment in a central position of the former means, the centre segment support means including an axially extended rod attached to one of the side segment moving means, a block radially movably attached to the centre segment and slidably supported by the axially extended rod, a first biasing member provided on the block for biasing the centre segment in an inner radial direction so that the centre segment comes into contact with the right side segment and the left side segment, and a second biasing member provided between one of the side segment means and the block for biasing the block toward the other side segment when both side segments are moved closer to each other.

With the above-mentioned construction, when both side segments are synchronously moved closer to each other, the centre segment and one side segment are together pushed to the other side segment owing to the fact that the block is biased toward the other side segment by the second biasing member, and the centre segment is biased in the inner radial direction by the first biasing member. When both side segments are moved further closer to each other, the inner side of the other side segment comes into contact with the block. When both side segments are moved further closer to each other, the one side segment is moved to the other side segment against the second biasing member until the inner side of the one side segment comes into contact with the block. Accordingly, the centre segment remains in the centre position of the former without moving away from both side segments when both side segments are in the closest positions.

This and other objects, features and advantages of the present invention will become more apparent from the following detailed description and drawings by example only, in which:-
Figure 1 is an enlarged sectional view showing a main portion of a tyre building apparatus according to the present invention with the former axially and radially expanded ;
Figure 2 is an enlarged sectional view showing the main portion with the former being axially contracted and radially expanded;
Figure 3 is an enlarged sectional view showing the main portion, the former being axially and radially contracted;
Figures 4A, 4B and 4C are diagrams showing stages by which the segment unit of the former is axially contracted;
Figure 5 is a plan view showing a centre segment support mechanism;
Figure 6 is a side view of the centre segment support mechanism;
Figure 7 is a side view showing the former radially expanded and radially contracted;
Figure 8 is a sectional view showing a driving mechanism; and
Figures 9A to 9G are schematic diagrams showing stages in which a raw tyre is built by use of the tyre building apparatus of the present invention.

The tyre building apparatus comprises a cylindrical former 4, an inner shaft 5, an outer shaft 6, a cylindrical sleeve 100, and sliders 8.

The former 4 includes a plurality of segment units 3 which are arranged in a circle to form a hollow cylinder. Each segment unit 3 comprises a rigid centre segment 1 made of metal, plastics, or the like, and a pair of rigid side segments 2 made of metal, plastics or the like. The inner shaft 5 is placed in the former 4. The outer shaft 6 is in the form of a hollow cylinder and axially movably mounted on the inner shaft 5. Also, the sleeve 100 is axially movably mounted on the inner shaft 5 so that the outer shaft 6 and the sleeve 100 can be moved towards and away from each other in the axial direction.

The sliders 8 are axially movable on the sleeve 100 and the outer shaft 6 respectively. Each slider 8 caries a turn-up bladder 10, a pressing device 11 for pressing radially outwardly the turn-up bladder 10 against the bead ring around which side end portions of the carcass have been turned up. The outer shaft 6 and the sleeve 100 carry a guide mechanism 7, and a centre segment support mechanism 12 for moving the centre segment 1 in the radial direction following radial movement of the side segments 2. The guide mechanisms 7 are provided between one side portion of the former 4 and the sleeve 100, and between the other side portion of the former 4 and the outer shaft 6. A link mechanism 9 is provided between the guide mechanism 7 and the slider 8 for moving the side segment 2 in the radial direction. The link mechanism 9 is actuated by axial movement of the slider 8.

Accordingly, the former 4 can be expanded and contracted in the axial direction as well as in the radial direction. In other words, the shoulder portions 13 of the former 4 can be moved towards and away from each other in the axial direction and the overall diameter of the former 4 can be changed.

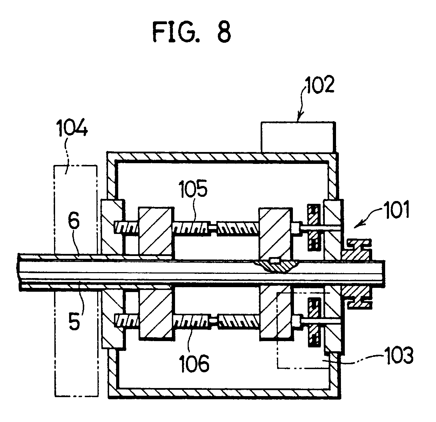

As shown in Figure 8, the inner shaft 5 is rotatably supported in a support frame 101. The sleeve 100 is fixedly mounted on the inner shaft 5. The outer shaft 6 is axially slidably mounted on the inner shaft 5. Indicated at 105,106 are screw shafts for driving the sleeve 100 and the outer shaft 6. The screw shafts 105,106 each have two screw sections which have opposite thread directions to each other. The screw shafts 105,106 are driven by a motor unit 103. Indicated by 102 is a drive motor for the outer shaft 6 and the inner shaft 5 fixed with the sleeve 100. Shown by 104 is a bead setting device for setting a bead ring to a side end portion of the former.

The centre segment 1 of the segment unit 3 is in the form of an arc in a circumferential direction. Also, the centre segment 1 is formed with tapered faces 14 in the opposite end portions. The side segment 2 is in the form of the same arc as the centre segment 1. Accordingly, the circumferential length of the cylinder made of the side segments is the same as that of the cylinder made of the centre segments. Also, the side segment 2 is formed with a vertical face 15 in the outside end portion, and a horizontal face 17 and a tapered face 18 in the inside end portion 16. The side segments and the centre segment have such axial lengths that the centre segment will not move away from the side segments so as not to damage the carcass when the side segments move to and away from each other.

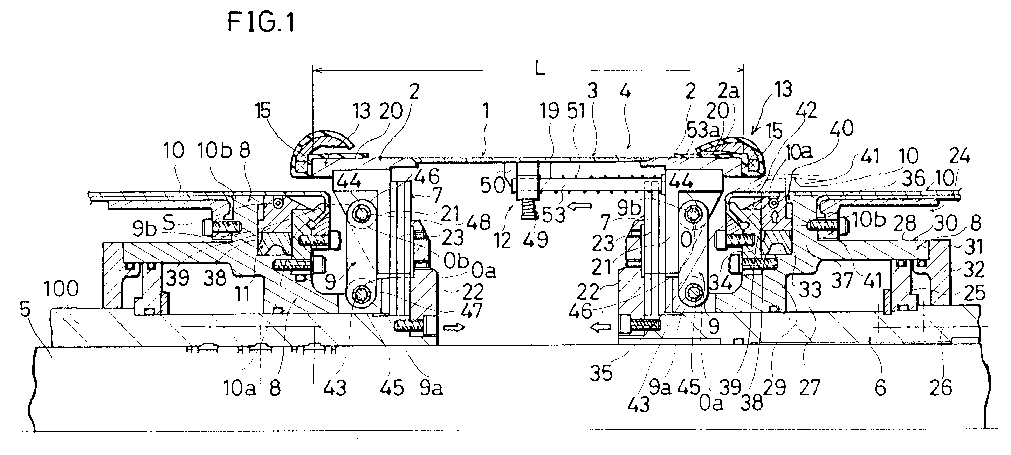

As shown in Figure 1, when the former 4 is expanded in the axial direction to set in an axially expanded state, the tapered faces 14 of the centre segment 1 come into contact with the tapered faces 18 of the side segments 2, and the outer surface 19 of the centre segment 1 and the outer surfaces 20 of the side segments 2 come to form a continuous surface without any steps.

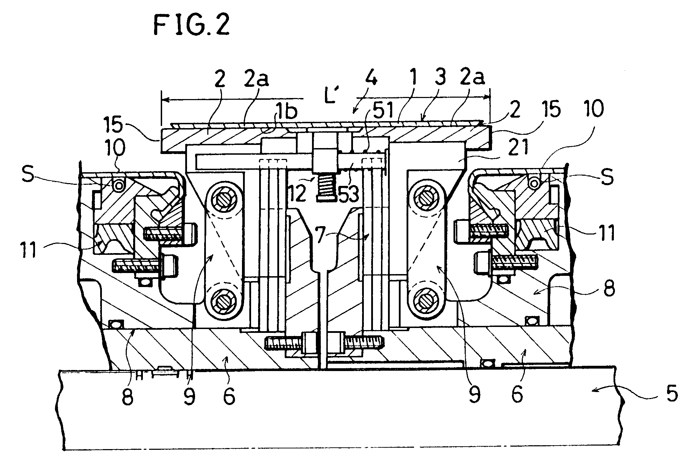

When the side segments 2 are moved closer to each other in the direction of the arrow shown in Figure 1, i.e. in the axial direction to set in an axially contracted state, the centre segment 1 comes over and overlaps with the side segments 2 as shown in Figure 2. The sleeve 100 is fixedly attached to the inner shaft 5. The outer shaft 6 is axially movably mounted on the inner shaft 5 which is supported at one end by the support frame 101. The sleeve 100 and the outer shaft 6 are moved closer to and away from each other by driving the screw shafts 105 and 106 in the predetermined direction with the motor unit 103.

The guide mechanism 7 guides the movement of the side segment 2 in a radial direction and allows the side segment 2 to move in the axial direction in accordance with axial movements of the outer shaft 6. The guide mechanism 7 includes a block 21 fixedly attached to the underside of the side segment 2, a block 22 fixedly attached to the outer shaft 6, and a linear guide member 23 provided between the block 21 and the block 22.

A cylindrical mechanism 24 has a ring piston 25 fixedly attached to the outer shaft 6 (or the sleeve 100). The cylinder 24 has a hydraulic passage 26. The slider 8 is moved in the axial direction by feeding and discharging hydraulic pressure to and from a chamber 27 defined by the cylinder tube, the fixed ring piston 25, and the outer shaft 6 (or the sleeve 100).

Furthermore, the slider 8 includes a body 30 having a peripheral wall 28 and an inner wall 29, and an outer wall 31 defined by a cover plate 32 and forms the cylindrical tube of the cylinder mechanism 24. The slider 8 has an annular recess 33 defined by a flange 37 formed on the peripheral wall 28, and a block 34. The pressing device 11 is provided in the annular recess 33. The turn-up bladder 10 is attached to the slider with its inside end portion 10a held between the blocks 34,35, and its outside end portion 10b held between the flange 37 and a block 36.

The pressing device 11 includes a resilient ring 38 and a plurality of pressing members 39 placed on the resilient ring 38. The resilient ring 38 is radially expanded so as to allow the pressing member 39 to press the bladder 10 in the direction of the arrow shown in Figure 1. In Figure 1, the bladder 10 pressed by the pressing device 11 is illustrated by phantom lines. The pressing member 39 is kept from moving in a radially outward direction by a projection 40 formed on an outer portion of the flange 37, and a projection 41 formed on the pressing member 39. Also, the pressing member 39 is formed with a projection 42 made in contact with the block 34. Indicated at S is a spring for urging the pressing member 39 in an inner radial direction.

The link mechanism 9 connects the slider 8 with the guide mechanism 7. One end 9a of the link mechanism 9 is pivotably attached to the slider 8. The other end 9b of the link mechanism 9 is pivotably attached to the block 21 of the guide mechanism 7. Specifically, both ends 9a and 9b of the link mechanism 9 are formed with holes 43 and 44. A pivot 45 provided on the slider 8 is inserted in the hole 43. A pivot 46 provided on the block 21 is inserted in the hole 44. Indicated at 47,48 are bushes mounted on the pivots 45,46 respectively.

Accordingly, when the slider 8 is moved axially, a pivot point 0a on the end 9a of the link mechanism 9 is moved in an axial direction, another pivot point 0b on the end 9b of the link mechanism is moved in a radial direction. Consequently, the block 21 is moved in a radial direction so that the side segment 2 is moved in a radial direction.

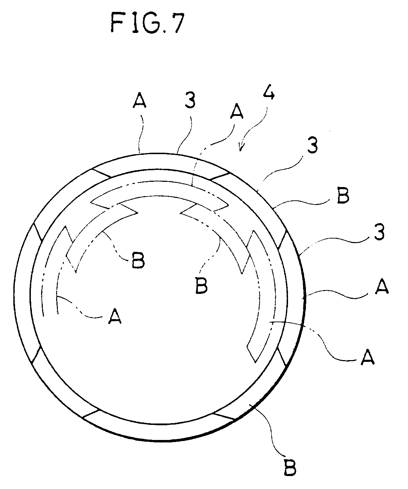

As shown in Figure 7, the segment units 3 are grouped into two types A and B in respect of circumferential lengths specifically, type A having a long circumferential length and type B having a short circumferential length. Type A segment units and type B segment units are arranged alternatively in the circumferential direction. A link mechanism 9 for type A segment units has a longer link member than the link mechanism 9 for type B segment units so that when the former 4 is contracted in the radial direction, type A segment units move into positions radially outside the positions of type B segment units.

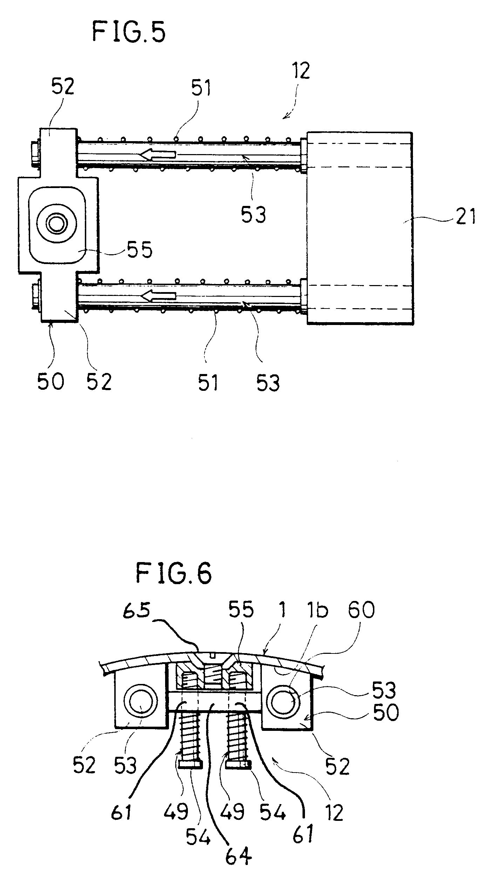

As shown in Figures 5 and 6, the centre segment support mechanism 12 includes a block 50 attached to the underside of the centre segment 1, springs 49 mounted on the block 50 for pushing the centre segment 1 radially inward, and springs 51 for pushing the block 50 in the direction of the arrow. Specifically, the block 50 is formed with a pair of projections 52. The projections 52 each have holes 60 through which two horizontal rods 53 are inserted respectively. One end 53a of the horizontal rod 53 is supported by the block 21. The projections 52 are axially slidable on the roads 53 respectively. The springs 51 are provided on the respective rods 53 between the block 21 and the projections 52.

The block 55 is attached to the centre segment 1 with a screw 65. The block 50 has a body 64 formed with two holes 61. Two stems 54 are passed through the respective holes 61 and screwed into the block 55. The springs 49 are mounted on the respective stems 54. Accordingly, the block body 50 is allowed to move in the radial direction with respect to the centre segment 1, but is not allowed to move in the axial direction. The centre segment is pulled radially inward and comes into contact with the side segments from the outside.

Operation of the tyre building apparatus will now be described.

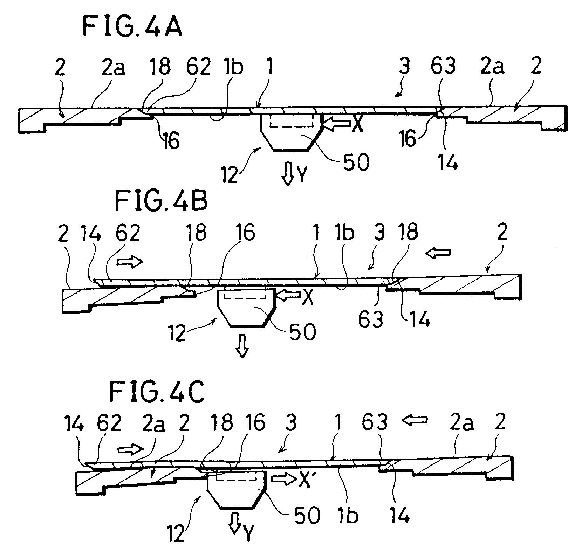

By moving the outer shaft 6 and the sleeve 100 closer to each other, the former 4 is changed from the axially expanded state shown in Figure 1, where the respective outer surfaces 19,20 of the centre segment 1 and the side segments 2 form a continuous surface, to the axially contracted state shown in Figure 2, where, the sleeve 100 and the outer shaft 6 are moved closer to each other. Consequently, both sliders 8 come closer to each other. In the first stage of this contracting operation, the centre segment 1 and side segments 2 of the segment unit 3 are in the state shown in Figure 4A. When the side segments come closer to each other, the block 50 of the centre segment support mechanism 12 is pushed in the direction of arrows X and Y. Consequently, as shown in Figure 4B, the left side segment 2 comes under one end 62 of the centre segment 1, moving towards the right side segment 2 while sliding under the centre segment 1. As this proceeds, the centre segment 1 moves upward. However, the block 50 follows the upward movement of the centre segment 1 because the block 50 is movable in the radial direction.

After the inside end face 16 of the left side segment 2 comes into contact with the block 50 as shown in Figure 4C, the left side segment 2 pushes the centre segment 1 in the direction of the arrow X', against the pushing force of the springs 51, so that the other end portion 63 of the centre segment 1 moves over the right side segment 2.

When both side segments 2 are further moved closer to each other, the centre segment 1 is moved in the direction of the arrow X' together with the left side segment 2 while the right side segment 2 is moved towards the left side segment 2 while sliding under the centre segment 1. Consequently, the axial length of the former 4 is changed from L shown in Figure 1 to L' shown in Figure 2 and in both the axially contracted state and the axially expanded state (length L and L'), the centre segment 7 is kept approximately in the centre of the former.

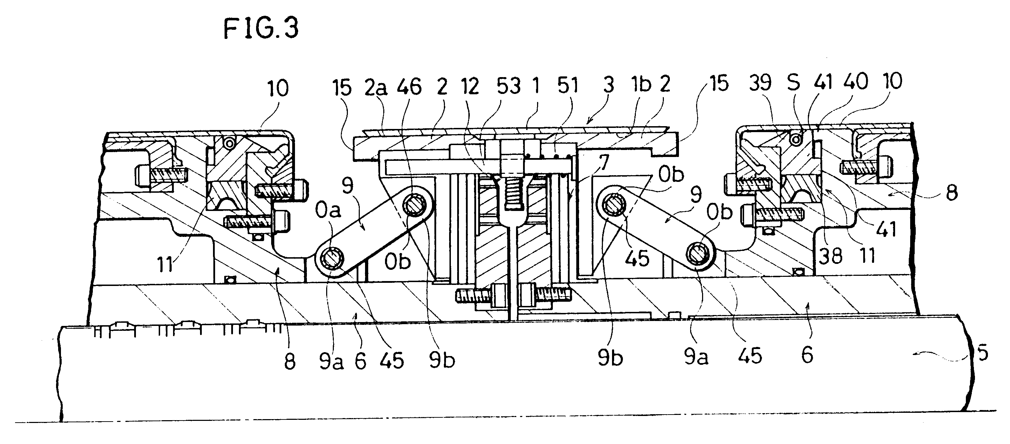

When the sliders 8 are moved away from each other, the side segments 2 of the segment units 3 are moved radially inward. Consequently, the former 4 changes to a radially contracted state shown in Figure 3. In other words, the diameter of the former 4 is decreased.

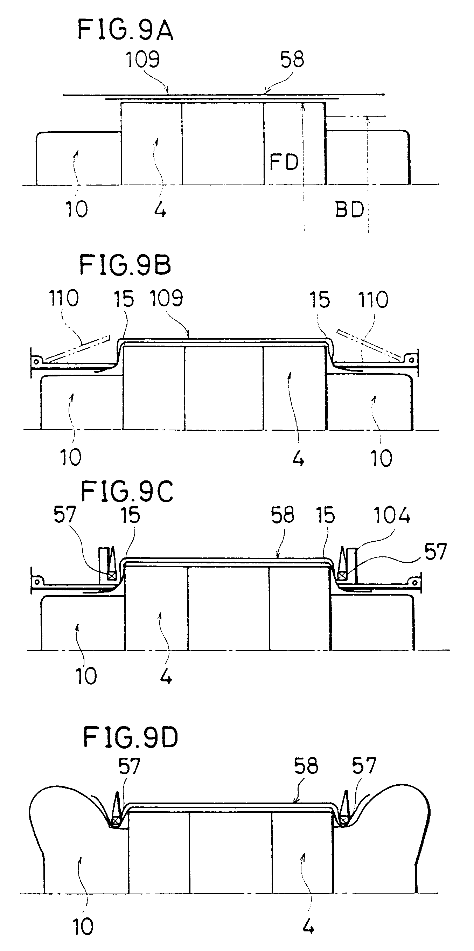

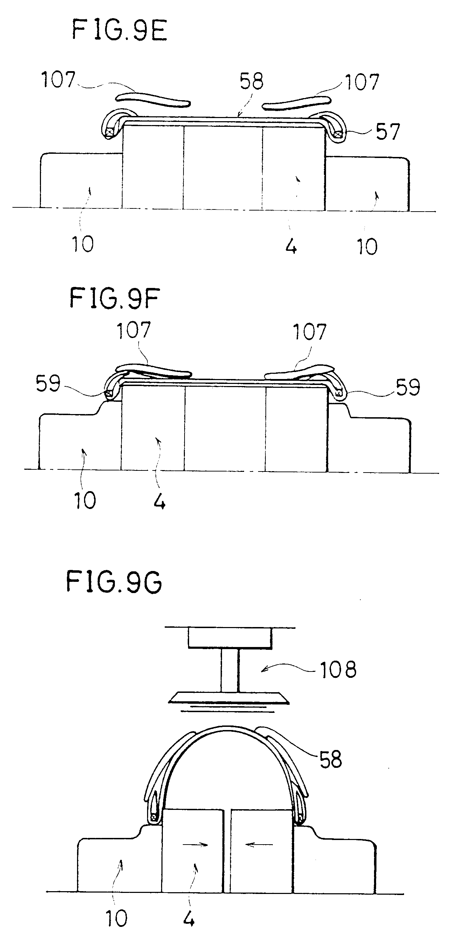

This tyre building apparatus is used to build a raw tyre as follows. As shown in figure 9A, first the former 4 is set in the axially expanded state with an axially long length and the radially expanded state, that is, the state shown in Figure 1. In this state, the diameter FD of the former is greater than the bead diameter BD of the tyre. On the former 4 are applied carcass plies 109 to form a cylindrical carcass 58.

The opposite end portions of the carcass 58, in other words, portions overhung outward from the end faces 15 of the side segments 2, are turned down by a known turn down finger device 110 as shown in Figure 9B. Subsequently, as shown in Figure 9C, each of the bead rings 57 having apexes is set on the end face 15 of the side segment 2 through the turn down carcass by the bead setting device 104. Thereafter, the opposite end portions of the carcass 58 are turned up around the beard ring 57 by supplying air or another fluid into the turn-up bladders 10 to cause them to expand.

Thereafter, the fluid is drawn out from the bladders 10. A pair of sidewalls 107 are applied on the carcass 58 to cover the turned-up portions as shown in Figure 9E. Subsequently, the pressing members 39 of the pressing device 11 are radially expanded so as to lock the bead portions as shown in Figure 9F.

With the bead portions locked, the sleeve 100 and the outer shaft 6 are moved closer to each other. At the same time, air or another fluid is supplied into the cylindrical carcass 58 so that it is expanded into a toroidal shape until the upper portion of the carcass 58 is united with a breaker tread assembly 108. The breaker tread assembly 108 is disposed in an axially intermediate position of the former 4 and surrounding carcass 58.

Finally, as shown in Figure 3, the sliders 8 are moved away from each other so as to reduce the diameter of the former 4. The toroidally shaped raw tyre is dismounted from the former 4.

From the above description, it will be seen that the tyre building apparatus has the following advantages:
1. When tyre components are applied on the former to form a cylindrical carcass, the former can be expanded in the radial direction as well as the axial direction, which makes it possible to provide a larger diameter of former than the bead diameter of the tyre to be built. Accordingly, although the tyre building apparatus employs a single-stage method, the tyre building apparatus makes it possible to use carcass plies whose ply cord specification is normally that which is used in two-stage tyre building. Consequently, increased productivity and improved operability can be obtained.
2. When a raw tyre is built, the diameter of the former can be made smaller than the bead diameter of the built raw tyre, so that the raw tyre can be dismounted from the former very easily.
3. Because the former diameter to which the tyre components are applied is greater than that of the conventional single-stage former, the expansion rate of carcass plies when toroidally shaped is smaller.
4. The tyre building apparatus can provide a rigid and flat application peripheral surface section to ensure a proper pressing operation without the use of rubber cover ring or the like. Accordingly, insulation rubber, carcass plies, bead rings, sidewall rubbers and the like can be satisfactorily adhered to one another.
5. The tyre building apparatus employs a single-stage method and therefore has the advantage of producing tyres of high uniformity.
6. The tyre building apparatus needs less installation space and a smaller number of operators, which assures higher productivity.
7. The tyre building apparatus is provided with the bead pressing device. Accordingly, the turn-up bladder can be firmly pressed to the bead and the carcass expanding fluid can be kept from escaping from the carcass when shaping the carcass into the toroidal shape.
8. Bead rings can be set at the vertical end faces of the side segments of the former.
9. The centre segment does not project from the side segments when the side segments are moved closer to each other. The centre segment remains approximately at the centre position of the former in both the axially expanded state and the axially contracted state (the former length L arid L' ). When tyre components are applied, the centre segment stays in the centre position. In other words, centring is assured. Accordingly, no deformation of the toroidal shape of the carcass ply will occur in the shaping step. Also, the applied tyre components can be pressed to assure adhesion. Furthermore, a tyre component application periphery having no gap can be provided without using a rubber covering.

Although the present invention has fully been described by way of example with reference to the accompanying drawings, it is to be understood that various changes and modifications will be apparent to those skilled in the art. Therefore, unless otherwise such changes and modifications depart from the scope of the invention, they should be construed as being included therein.

## Claims

1. A tyre building apparatus provided with former means including a plurality of segment units (3) arranged around a circle and right side segments (2) and left side segments (2), is characterised by an inner shaft (5) extending through the former means, an outer hollow shaft (6) axially slidably mounted on the inner shaft (5), a sleeve (100) axially slidably mounted on the inner shaft (5), right guide means (7) provided between the right side segments (2) and the outer hollow shaft (6) for guiding the movement of the right side segments in the radial direction and in the axial direction, left guide means (7) provided between the left side segments (2) and the sleeve (100) for guiding the movement of the left side segments (2) in the radial direction and in the axial direction, right slider means (8) axially slidably mounted on the outer shaft (6), left slider means (8) axially slidably mounted on the sleeve (100), a right link mechanism (9) provided between the right guide means (7) and the right slider means (8) for moving the right side segments (2) in the radial direction due to axial movement of the right slider means (8), and a left link mechanism (9) provided between the left guide means (7) and the left slider means (8) for moving the left side segment (2) in the radial direction by means of an axial movement of the left slider means (8), whereby the outer shaft (6) and the sleeve (100), the right slider means (8), and the left slider means (8) are respectively moved closer to or away from each other so as to set the former means into an axially expanded state, a radially expanded state, an axially contracted state, or a radially contracted state.

2. A tyre building apparatus according to claim 1 characterised in that the right and left slider means (8) include an expandable bladder (10) for turning up a side end portion of a carcass around a bead ring (57).

3. A tyre building apparatus according to claim 2 characterised in that the right and left slider means (8) further include pressing means (39) for pressing the bladder (10) to the bead ring (57) around which the side end portion of the carcass has been turned up.

4. A tyre building apparatus according to any of claims 1 to 3 characterised in that the right segments (2) include a right end having a face (15) perpendicular to the axis of the inner shaft (5), and the left segments (2) include a left end having a face (15) perpendicular to the axis of the inner shaft (5).

5. A tyre building apparatus according to any of claims 1 to 4 characterised in that the segment unit (3) further has a centre segment (1) further comprising centre segment support means (12) for supporting the centre segment (1) in a central portion of the former means.

6. A tyre building apparatus according to claim 5 characterised in that the centre segment support means (12) includes right moving means for moving the right side segment (2) at least in the axial direction, left moving means for moving the left side (2) segment at least in the axial direction, an axially extended rod (53) attached to one of the side segment moving means, a block (50) radially movably attached to the centre segment (1) and slidably supported by the axially extended rod (53), a first biasing member provided on the block for biasing the centre segment (1) in an inner radial direction so that the centre segment (1) comes into contact with the right side segment (2) and the left side segment (2), and a second biasing member provided between one of the side segment moving means and the block (50) for biasing the block (50) toward the other side segment (2) when both side segments (2) are moved closer to each other.

7. A tyre building apparatus according to claim 1 characterised in that the segment unit (3) has a centre segment (1), and centre segment support means (12) for supporting the centre segment (1) in a central position of the former means, the centre segment support means (12) including an axially extended rod (53) attached to one of the side segment moving means, a block (50) radially movably attached to the centre segment (1) and slidably supported by the axially extended rod (53), a first biasing member provided on the block (50) for biasing the centre segment (1) in an inner radial direction so that the centre segment (1) comes into contact with the right side segment (2) and the left side segment (2), and a second biasing member provided between one of the side segment moving means and the block (50) for biasing the block (50) toward the other side segment (2) when both side segments (2) are moved closer to each other.

## Patentansprüche

1. Eine Reifenaufbauvorrichtung, die mit Formermitteln versehen ist, die eine Mehrzahl von um einen Kreis herum angeordnete Segmenteinheiten (3) und rechte Seitensegmente (2) und linke Seitensegmente (2) einschließen, ist
**gekennzeichnet durch**
eine sich durch die Formermittel erstreckende innere Welle (5), eine axial gleitbar auf der inneren Welle (5) angebrachte äußere hohle Welle (6), eine axial gleitbar auf der inneren Welle (5) angebrachte Hülse (100), rechte Führungsmittel (7), die zwischen den rechten Seitensegmenten (2) und der äußeren hohlen Welle (6) vorgesehen sind zur Führung der Bewegung der rechten Seitensegmente in der radialen Richtung und in der axialen Richtung, linke Führungsmittel (7), die zwischen den linken Seitensegmenten (2) und der Hülse (100) vorgesehen sind zur Führung der Bewegung der linken Seitensegmente (2) in der radialen Richtung und in der axialen Richtung, axial gleitbar auf der äußeren Welle (6) angebrachte rechte Gleitermittel (8), axial gleitbar auf der Hülse (100) angebrachte linke Gleitermittel (8), einen rechten Verbindungsmechanismus (9), der zwischen den rechten Führungsmitteln (7) und den rechten Gleitermitteln (8) vorgesehen ist zur Bewegung der rechten Seitensegmente (2) in der radialen Richtung aufgrund einer axialen Bewegung der rechten Gleitermittel (8), und einen linken Verbindungsmechanismus (9), der zwischen den linken Führungsmitteln (7) und den linken Gleitermitteln (8) vorgesehen ist zur Bewegung des linken Seitensegments (2) in der radialen Richtung mittels einer axialen Bewegung der linken Gleitermittel (8), wobei die äußere Welle (6) und die Hülse (100), die rechten Gleitermittel (8) und die linken Gleitermittel (8) jeweils näher aneinander heran oder voneinander weg bewegt werden, um die Formermittel in einen axial ausgedehnten Zustand, einen radial ausgedehnten Zustand, einen axial zusammengezogenen Zustand oder einen radial zusammengezogenen Zustand zu setzen.

2. Eine Reifenaufbauvorrichtung nach Anspruch 1,
dadurch gekennzeichnet,
daß die rechten und linken Gleitermittel (8) eine ausdehnbare Blase (10) zum Umschlagen eines Seitenendabschnitts einer Karkasse um einen Wulstring (57) herum einschließen.

3. Eine Reifenaufbauvorrichtung nach Anspruch 2,
dadurch gekennzeichnet,
daß die rechten und linken Gleitermittel (8) ferner Preßmittel (39) einschließen, die die Blase (10) an den Wulstring (57) pressen, um welchen herum der Seitenendabschnitt der Karkasse umgeschlagen worden ist.

4. Eine Reifenaufbauvorrichtung nach einem der Ansprüche 1 bis 3,
dadurch gekennzeichnet,
daß die rechten Segmente (2) ein rechtes Ende mit einer Seite (15) senkrecht zur Achse der inneren Welle (5) und die linken Segmente (2) ein linkes Ende mit einer Seite (15) senkrecht zur Achse der inneren Welle (5) einschließen.

5. Eine Reifenaufbauvorrichtung nach einem der Ansprüche 1 bis 4,
dadurch gekennzeichnet,
daß die Segmenteinheit (3) ferner ein Zentrumssegment (1) aufweist, welches ferner Zentrumssegmenthaltemittel (12) zum Halten des Zentrumssegments (1) in einem zentralen Abschnitt der Formermittel umfaßt.

6. Eine Reifenaufbauvorrichtung nach Anspruch 5,
dadurch gekennzeichnet,
daß das Zentrumssegmenthaltemittel (12) einschließt rechte Bewegungsmlttel zur Bewegung des rechten Seitensegments (2) wenigstens in der axialen Richtung, linke Bewegungsmittel zur Bewegung des linksseitigen (2) Segments wenigstens in der axialen Richtung, eine sich axial erstreckende Stange (53), die an einem der Seitensegmentbewegungsmittel befestigt ist, einen Block (50), der radial bewegbar am Zentrumssegment (1) befestigt ist und gleitbar durch die sich axial erstreckende Stange (53) gehalten wird, ein erstes Vorspannbauteil, das auf dem Block vorgesehen ist zur Vorspannung des Zentrumssegments (1) in einer inneren radialen Richtung, so daß das Zentrumssegment (1) in Kontakt mit dem rechten Seitensegment (2) und dem linken Seitensegment (2) gelangt, und ein zweites Vorspannbauteil, das zwischen einem der Seitensegmentbewegungsmittel und dem Block (50) vorgesehen ist zur Vorspannung des Blocks (50) auf das andere Seitensegment (2) zu, wenn beide Seitensegmente (2) näher aneinander heran bewegt werden.

7. Eine Reifenaufbauvorrichtung nach Anspruch 1,
dadurch gekennzeichnet,
daß die Segmenteinheit (3) ein Zentrumssegment (1) und Zentrumssegmenthaltemittel (12) zum Halten des Zentrumssegments (1) in einer zentralen Position der Formermittel aufweist, wobei die Zentrumssegmenthaltemittel (12) eine sich axial erstreckende Stange (53), die an einem der Seitensegmentbewegungsmittel befestigt ist, einen Block (50), der radial bewegbar am Zentrumssegment (1) befestigt ist und gleitbar durch die sich axial erstreckende Stange (53) gehalten wird, ein erstes Vorspannbauteil, das auf dem Block (50) vorgesehen ist zur Vorspannung des Zentrumssegments (1) in einer inneren radialen Richtung, so daß das Zentrumssegment (1) in Kontakt mit dem rechten Seitensegment (2) und dem linken Seitensegment (2) gelangt, und ein zweites Vorspannbauteil einschließt, das zwischen einem der Seitensegmentbewegungsmittel und dem Block (50) vorgesehen ist zur Vorspannung des Blocks (50) auf das andere Seitensegment (2) zu, wenn beide Seitensegmente (2) näher aneinander heran bewegt werden.

## Revendications

1. Appareil de confection de pneumatiques, ayant un dispositif à organe formateur comprenant plusieurs éléments à segments (3) placés en cercle et des segments latéraux droit (2) et gauche (2), caractérisé par un arbre interne (5) passant dans le dispositif à organe formateur, un arbre externe creux (6) monté sur l'arbre interne (5) afin qu'il puisse coulisser axialement, un manchon (100) monté sur l'arbre interne (5) afin qu'il puisse coulisser axialement, un dispositif droit de guidage (7) placé entre les segments latéraux droits (2) et l'arbre externe creux (6) et destiné à guider le déplacement des segments latéraux droits dans la direction radiale et dans la direction axiale, un dispositif gauche de guidage (7) placé entre les segments latéraux gauches (2) et le manchon (100) et destiné à guider le déplacement des segments latéraux gauches (2) dans la direction radiale et dans la direction axiale, un coulisseau droit (8) monté afin qu'il puisse coulisser axialement sur l'arbre externe (6), un coulisseau gauche (8) monté afin qu'il puisse coulisser axialement sur le manchon (100), un mécanisme droit de liaison (9) placé entre le dispositif droit de guidage (7) et le coulisseau droit (8) et destiné à déplacer les segments latéraux droits (2) dans la direction axiale lors du déplacement axial du coulisseau droit (8), et un mécanisme gauche de liaison (9) placé entre le dispositif gauche de guidage (7) et le coulisseau gauche (8) et destiné à déplacer le segment latéral gauche (2) dans la direction radiale lors du déplacement axial du coulisseau gauche (8), si bien que l'arbre externe (6) et le manchon (100), le coulisseau droit (8) et le coulisseau gauche (8) sont déplacés de manière qu'ils se rapprochent ou s'écartent et règlent le dispositif à organe formateur à un état axialement dilaté, à un état radialement dilaté, à un état axialement contracté ou un état radialement contracté.

2. Appareil de confection de pneumatiques selon la revendication 1, caractérisé en ce que les coulisseaux droit et gauche (8) comprennent une vessie dilatable (10) destinée à replier une partie d'extrémité latérale d'une carcasse montée sur une tringle (57).

3. Appareil de confection de pneumatiques selon la revendication 2, caractérisé en ce que les coulisseaux droit et gauche (8) comportent en outre un dispositif de pression (39) destiné à repousser la vessie (10) vers la tringle (57) autour de laquelle a été repliée la partie d'extrémité latérale de la carcasse.

4. Appareil de confection de pneumatiques selon l'une quelconque des revendications 1 à 3, caractérisé en ce que les segments droits (2) comportent une extrémité droite ayant une face (15) perpendiculaire à l'axe de l'arbre interne (5), et les segments gauches (2) comportent une extrémité gauche ayant une face (15) qui est perpendiculaire à l'axe de l'arbre interne (5).

5. Appareil de confection de pneumatiques selon l'une quelconque des revendications 1 à 4, caractérisé en ce que l'élément à segments (3) possède en outre un segment central (1) comprenant aussi un dispositif (12) de support de segment central (1) dans la partie latérale du dispositif à organe formateur.

6. Appareil de confection de pneumatiques selon la revendication 5, caractérisé en ce que le dispositif de support de segment central (12) comprend un dispositif droit de déplacement du segment latéral droit (2) au moins dans la direction axiale, un dispositif gauche de déplacement du segment latéral gauche (2) au moins dans la direction axiale, une tige axiale (53) fixée à l'un des dispositifs de déplacement de segments latéraux, un bloc (50) fixé au segment central (1) afin qu'il soit mobile radialement et supporté par la tige axiale (53) afin qu'il puisse coulisser, un premier organe de rappel placé sur le bloc et destiné à rappeler le segment central (1) en direction radiale vers l'intérieur afin que le segment central (1) vienne au contact du segment latéral droit (2) et du segment latéral gauche (2), et un second organe de rappel disposé entre l'un des dispositifs de déplacement de segment latéral et le bloc (50) afin qu'il rappelle le bloc (50) vers l'autre segment latéral (2) lorsque les deux segments latéraux (2) sont rapprochés mutuellement.

7. Appareil de confection de pneumatiques selon la revendication 1, caractérisé en ce que l'élément à segments (3) possède un segment central (1) et un dispositif (12) destiné à supporter le segment central (1) en position centrale sur le dispositif à organe formateur, le dispositif (12) de support de segment central comprenant une tige axiale (53) fixée à l'un des dispositifs de déplacement de segment latéral, un bloc (50) fixé au segment central (1) afin qu'il soit mobile radialement et supporté par la tige axiale (53) afin qu'il puisse coulisser, un premier organe de rappel disposé sur le bloc (50) et destiné à rappeler le segment central (1) en direction radiale vers l'intérieur afin que le segment central (1) vienne au contact du segment latéral droit (2) et du segment latéral gauche (2), et un second organe de rappel placé entre l'un des dispositifs de déplacement de segment latéral et le bloc (50) et destiné à rappeler le bloc (50) vers l'autre segment latéral (2) lorsque les deux segments latéraux (2) sont rapprochés mutuellement.
